# EUROPÄISCHE PATENTSCHRIFT

(11) **EP 2 066 541 B1**
(45) Veröffentlichungstag und Bekanntmachung des Hinweises auf die Patenterteilung: **01.09.2010**
(21) Anmeldenummer: 07820499.7
(22) Anmeldetag: 24.09.2007
(51) Int. Cl.: B60T 13/74, B60T 11/04

(54) **ELEKTRONISCHE FESTSTELLBREMSE**
ELECTRONIC PARKING BRAKE
FREIN DE STATIONNEMENT ÉLECTRONIQUE

(30) Priorität: 28.09.2006 DE 102006046024
(43) Veröffentlichungstag der Anmeldung: 10.06.2009
(73) Patentinhaber: SIEMENS AKTIENGESELLSCHAFT, 80333 München (DE)
(72) Erfinder: GOTTLIEB, Bernhard, 81739 München (DE); KAPPEL, Andreas, 85649 Brunnthal (DE); KELLER, Roland, 97241 Bergtheim (DE); SCHWEBEL, Tim, 80337 München (DE); WALLENHAUER, Carsten, 01987 Schwarzheide (DE)
(86) Internationale Anmeldenummer: PCT/EP2007/060092
(87) Internationale Veröffentlichungsnummer: WO 2008/052848

(56) Entgegenhaltungen:
- EP-A- 0 710 595
- EP-B- 1 098 429
- WO-A-03/080411
- WO-A-2004/014707

## Beschreibung

Die vorliegende Erfindung betrifft eine Vorrichtung gemäß dem Oberbegriff des Hauptanspruchs und ein dazugehöriges Verfahren.

Herkömmlicherweise wird zur Betätigung der Mechanik einer Feststellbremse eines Fahrzeugs ein durch den Fahrer direkt zu betätigender Hebel oder ein durch eine Steuerung gesteuerter Elektromotor verwendet. Die Bewegung des Hebels oder eines Elektromotors wird durch ein Getriebe an die Mechanik der Bremse, meist mit einer durch einen Bowdenzug gesteuerten Trommelbremse, angepasst, die auf diese Weise angesteuert wird. Insbesondere bei der Betätigung mittels eines Elektromotors ergeben sich Vorteile durch die auf diese Weise geschaffene Automatisierbarkeit des Betätigens der Feststellbremse. Auf diese Weise kann durch eine geeignete Steuerung ein Abwärtsrollen eines Fahrzeuges beim Warten auf einer geneigten Fahrbahn verhindert werden. Derartige Bremssysteme sind bekannt und werden unter anderem als "automatische Parkbremse" oder "automatische Feststellbremse" bezeichnet.

Herkömmliche Feststellbremsen benötigen in nachteiliger Weise Getriebe zur Anpassung der Drehzahl und zur Bereitstellung einer Blockierwirkung. Zusätzlich sind Kraftsensoren zur Messung von Drehmomenten und Kräften erforderlich. Herkömmliche Feststellbremsen sind aufgrund dieser zusätzlichen Einrichtungen aufwändig und kostenintensiv zu erzeugen.

Herkömmlicherweise ist eine Feststellbremse als eine über einen Bowdenzug angesteuerte Trommelbremse ausgeführt. Im Falle einer automatischen, das heißt elektronisch angesteuerten Feststellbremse, wird durch eine geeignete Mechanik, meist eine Spindel, die Rotation eines elektromechanischen Antriebs in die zur Betätigung und zum Lösen des Bowdenzugs benötigte linear wirkende Kraft umgesetzt. Es muss über die Auslöselänge des Bowdenzugs eine vom Bremssystem abhängige Kraft-Weg-Funktion durch den Antrieb aufgebracht werden. Zum endgültigen Feststellen der Bremse ist durch den Antrieb mit angeschlossener Mechanik eine definierte Kraft aufzubringen und konstant zu halten.

Der Bowdenzug ist ein Maschinenelement, das zur Übertragung von Zugkräften, insbesondere entlang gekrümmter Wege, dient. Der Bowdenzug besteht aus einem innenliegenden Stahldraht oder Drahtseil, das in einer flexiblen Kunststoff- oder textilummantelten Hülle verlegt wird. Die Hülle wirkt als mechanische Führung des Zugs und als Gegenlager für die Übertragung der Zugkräfte, so dass der Bowdenzug Zugkräfte auch über mehrfach gebogene Pfade übertragen kann. Die Hülle ist daher in der Regel als dicht gewickelte, druckfeste Spirale ausgeführt. Die Verbindung der Bowdenzugseele mit dem zu bewegenden Maschinenteil geschieht entweder durch direkte Klemmung oder durch Einhängen eines Nippels in ein passend geformtes Gegenstück. Wichtig ist dabei, dass Biegemomente an der Bowdenzugseele vermieden und reine Zugkräfte übertragen werden, um frühzeitigen Bruch zu verhindern. Die Nippel können an der Bowdenzugseele durch Pressen, Löten oder Anschrauben befestigt werden. Die Ummantelung schützt den Zug vor äußeren Beschädigungen, verhindert das Eindringen von Staubpartikeln oder Feuchtigkeit und sorgt so dafür, dass die Funktion des Zugs durch mechanische Reibung oder Rost nicht beeinträchtigt wird.

Es ist Aufgabe der vorliegenden Erfindung für ein Fahrzeug eine Vorrichtung zum Feststellen und/oder Lösen einer Bremse bereitzustellen, wobei eine Antriebseinrichtung ohne Zusatzgetriebe eine kleine Rotationsfrequenz bei großem Drehmoment erzeugt, selbstblockierend ist, bei Stillstand keine Energie verbraucht, das eigene Drehmoment erfassen kann und die Vorrichtung im Vergleich zu herkömmlichen Vorrichtungen wirksam vereinfacht ist.

Die Aufgabe wird durch eine Vorrichtung gemäß dem Hauptanspruch gelöst. Die Aufgabe wird durch ein Verfahren gemäß dem Nebenanspruch gelöst.

Es wird ein elektrisch-rotatorischer Antrieb zur Betätigung einer Feststellbremse eines Fahrzeugs bereitgestellt. Eine Kombination eines geeigneten elektrisch-rotatorischen Antriebs einer Steuerung und einer Bremsmechanik bildet ein Bremssystem mit besonders vorteilhaften Eigenschaften. Die vorliegende Erfindung verwendet die Kombination eines aus der EP 1 098 429 B1 bekannten piezoelektrischen Motors (PAD Piezoelectric Actuator Drive) mit einer Steuerung und einer mechanischen Feststellbremse zu einem die Aufgabe der vorliegenden Erfindung lösenden Bremssystem. Das erfindungsgemäße Bremssystem verwendet zur Betätigung einer Feststellbremse einen nach EP 1 098 429 B1 bekannten piezoelektrischen Motor (PAD Piezoelectric Actuator Drive). Der nach der EP 1 098 429 B1 offenbarte piezoelektrische Motor besitzt gegenüber bekannten Elektromotoren unter anderem folgende vorteilhafte Eigenschaften:
- Ohne Zusatzgetriebe kann eine kleine Rotationsfrequenz bei einem großen Drehmoment erzeugt werden;
- das Blockiermoment ist gegenüber dem Arbeitsdrehmoment größer (selbstblockierend);
- bei Stillstand (bei Blockierung) wird keine Energie verbraucht;
- der Motor besitzt inhärente Sensoreigenschaften, das heißt der Motor wird als Antrieb und ebenso zur Drehmomentmessung verwendet.

Der Inhalt der EP 1 098 429 B1 gehört vollständig zur Offenbarung dieser Anmeldung.

Weitere vorteilhafte Ausgestaltungen finden sich in den Unteransprüchen.

Gemäß einer vorteilhaften Ausgestaltung sind die mindestens zwei elektromechanischen Antriebselemente Piezoaktoren.

Gemäß einer weiteren vorteilhaften Ausgestaltung ist die Einrichtung zum Umwandeln der Rotationsbewegung in eine zum Feststellen und/oder Lösen der Bremse wirkende Translationsbewegung eine Spindel oder eine Kurvenscheibe.

Gemäß einer weiteren vorteilhaften Ausgestaltung werden die auf die Bremse wirkenden Kräfte der Translationsbewegung mittels eines Bowdenzugs auf die Bremse übertragen.

Gemäß einer weiteren vorteilhaften Ausgestaltung ist die Bremse eine Trommelbremse oder eine Keilbremse.

Gemäß einer weiteren vorteilhaften Ausgestaltung ist der Antriebsring kreisförmig und die mindestens zwei elektromechanischen Antriebselemente sind so am Antriebsring angeordnet, dass ihr jeweiliger Hub radial auf den Antriebsring wirkt.

Gemäß einer weiteren vorteilhaften Ausgestaltung sind zwei elektromechanische Antriebselemente innerhalb einer Bewegungsebene des Antriebsrings um einen Winkel von annähernd 90° zueinander versetzt.

Gemäß einer weiteren vorteilhaften Ausgestaltung sind mehr als zwei elektromechanische Antriebselemente innerhalb einer Bewegungsebene des Antriebsrings um einen annähernd konstanten Winkel zueinander versetzt.

Gemäß einer weiteren vorteilhaften Ausgestaltung befindet sich die Welle innerhalb des Antriebsrings.

Gemäß einer weiteren vorteilhaften Ausgestaltung befindet sich die Welle außerhalb des Antriebsrings.

Gemäß einer weiteren vorteilhaften Ausgestaltung ist zwischen mindestens einem der mindestens zwei elektromechanischen Antriebselemente und dem Antriebsring ein Hubübersetzer, insbesondere ein Hebelübersetzer, vorhanden.

Gemäß einer weiteren vorteilhaften Ausgestaltung ist gegenüber von mindestens einem der mindestens zwei elektromechanischen Antriebselemente ein Federelement am Antriebsring befestigt.

Gemäß einer weiteren vorteilhaften Ausgestaltung besteht zwischen Antriebsring und Welle ein dauernder Druckkontakt.

Gemäß einer weiteren vorteilhaften Ausgestaltung besteht zwischen dem Antriebsring und der Welle eine formschlüssige Kraftübertragung, insbesondere mittels einer Verzahnung.

Gemäß einer weiteren vorteilhaften Ausgestaltung sind an einer Welle mehrere Motoreinheiten mit jeweils einem Antriebsring benachbart angeordnet.

Gemäß einer weiteren vorteilhaften Ausgestaltung sind zwei äußere Antriebsringe gekoppelt und ein dritter Antriebsring ist zwischenliegend auf der Welle positioniert. Gemäß einer weiteren vorteilhaften Ausgestaltung zum erfindungsgemäßen Verfahren sind zwei elektromechanische Antriebselemente innerhalb einer Bewegungsebene des Antriebsrings in einem Winkel von annähernd 90° zueinander versetzt. Sind die zwei elektromechanischen Aktoren druckvorgespannte Piezoaktoren, ist in Ausgangsstellung der Hub der Piezoaktoren minimal und es besteht ein dauernder Druckkontakt zwischen Antriebsring und Welle, während des Betriebs wird der Hub der Piezoaktoren sinusförmig und seitlich um annähernd 90° versetzt auf die Antriebswelle aufgebracht.

Gemäß einer weiteren vorteilhaften Ausgestaltung treiben mindestens zwei elektromechanische Motoren eine Welle an.

Gemäß einer weiteren vorteilhaften Ausgestaltung wird die erfindungsgemäße elektrisch-rotatorische Antriebseinrichtung als Stellantrieb verwendet.

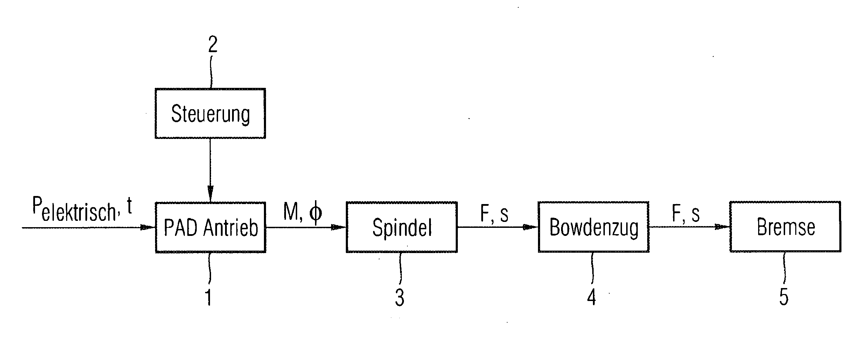

Die Erfindung wird anhand eines Ausführungsbeispiels in Verbindung mit Figur 1 näher beschrieben. Es zeigt
- Figur 1: ein Ausführungsbeispiel einer erfindungsgemäßen Vor- richtung.

In Figur 1 sind die Bestandteile eines erfindungsgemäßen Bremssystems in einer Wirkungskette dargestellt. Mit P_{elektrisch} wird eine elektrische Eingangsleistung bezeichnet, die über einen bestimmten Zeitraum t aufgebracht wird. Diese Leistung P_{elektrisch} wird in dem erfindungsgemäßen piezoelektrischen Motor (PAD Piezoelectric Actuator Drive) als elektrisch-rotatorische Antriebseinrichtung 1 in ein Drehmoment M umgewandelt, das vom PAD-Antrieb 1 über den Drehwinkel Φ aufgebracht wird. Die elektrisch-rotatorische Antriebseinrichtung 1 wird von einer elektronischen Steuereinrichtung 2 angesteuert. Die rotatorische Energie der elektrisch-rotatorischen Antriebseinrichtung 1 wird mittels einer Spindel 3 in eine translatorische Energie mit einer Kraft F und einem Weg s umgewandelt. Dabei ist F die Kraft, mit der ein Bowdenzug 4 und die Bremse 5 angesteuert werden. Dabei ist s der Weg, über den der Bowdenzug 4 und die Bremse 5 betätigt werden.

Die erfindungsgemäße elektrisch-rotatorische Antriebseinrichtung 1, das heißt der PAD-Antrieb 1, ist durch eine geringe Rotationsfrequenz und ein hohes Drehmoment M bestimmt. Auf diese Weise ist es möglich, die den Bowdenzug 4 antreibende Spindel 3 direkt an den PAD-Antrieb 1 zu koppeln. Auf diese Weise wird ein zusätzliches Getriebe eingespart.

Ein weiterer Vorteil ist ein großes Blockiermoment des PAD-Antriebs 1. Auf diese Weise wird eine einmal angefahrene Position ohne Energieaufwand, und zwar ebenso bei Einwirkung eines hohen Drehmomentes, gehalten. Die Bremse 5 bleibt damit ohne zusätzlichen Energieaufwand festgestellt. Bei herkömmlichen Feststellbremsen, die herkömmliche Elektromotoren verwenden, wird zur Erzeugung der Selbsthaltefunktion der Bremse ein blockierendes Getriebe verwendet. Dabei ist es besonders nachteilig, dass ein derartiges Getriebe einen ungünstigen Wirkungsgrad aufweist.

Über die in Figur 1 dargestellte Mechanik wird das vom PAD-Antrieb 1 aufgebrachte Drehmoment M in eine Kraft F umgesetzt. Der PAD-Antrieb 1 ermöglicht durch inhärente Sensoreigenschaften die direkte Messung des Drehmoments M und damit der Kraft F, die auf den Bowdenzug 4 wirkt. Auf diese Weise wird ein Bremssystem geschaffen, bei dem der PAD-Antrieb 1 den Bowdenzug 4 mit einer definierten Kraft F auslöst, ohne dass ein zusätzlicher Sensor benötigt wird.

Der PAD-Antrieb 1 eignet sich gemäß der vorliegenden Erfindung besonders zum Antrieb einer Feststellbremse. Die bei herkömmlichen elektromotorischen Antrieben erforderlichen Komponenten wie Getriebe zur Anpassung der Drehzahl und zwecks einer Blockierwirkung, sowie Kraftsensoren entfallen bei Verwendung des PAD-Antriebs 1. Der mechanische Aufbau eines erfindungsgemäßen Bremssystems wird auf diese Weise wesentlich vereinfacht.

## Patentansprüche

1. Vorrichtung zum Feststellen und/oder Lösen einer Bremse (5) eines Fahrzeugs, insbesondere Kraftfahrzeuges, mit
- einer von einer elektronischen Steuereinrichtung (2) angesteuerten elektrisch-rotatorischen Antriebseinrichtung (1) zur Erzeugung einer Rotationsbewegung,
- einer Einrichtung zum Umwandeln der Rotationsbewegung in eine zum Feststellen und/oder Lösen der Bremse wirkende Translationsbewegung,
**dadurch gekennzeichnet, dass** die Antriebseinrichtung (1)
- mindestens zwei elektromechanische Antriebselemente,
- mindestens einen Antriebsring, der durch einen Hub der elektromechanischen Antriebselemente zu einer umlaufenden Verschiebebewegung anregbar ist,
- eine Welle, die an den Antriebsring aufsetzbar ist, so dass durch die Verschiebebewegung des Antriebsrings die Welle rotierbar ist, aufweist, und
- der mindestens eine Antriebsring mit den Antriebselementen mechanisch steif verbunden ist.

2. Vorrichtung nach Anspruch 1,
**dadurch gekennzeichnet, dass**
die mindestens zwei elektromechanischen Antriebselemente Piezoaktoren sind.

3. Vorrichtung nach Anspruch 1 oder 2,
**dadurch gekennzeichnet, dass**
die Einrichtung zum Umwandeln der Rotationsbewegung in eine zum Feststellen und/oder Lösen der Bremse wirkende Translationsbewegung eine Spindel oder eine Kurvenscheibe (3) ist.

4. Vorrichtung nach Anspruch 1, 2 oder 3,
**dadurch gekennzeichnet, dass**
die auf die Bremse wirkenden Kräfte der Translationsbewegung mittels eines Bowdenzugs (4) auf die Bremse (5) übertragen werden.

5. Vorrichtung nach einem oder mehreren der vorangehenden Ansprüche 1 bis 4,
**dadurch gekennzeichnet, dass**
die Bremse (5) eine Trommelbremse, Keilbremse oder Schwimmsattelbremse ist.

6. Vorrichtung nach einem oder mehreren der vorangehenden Ansprüche 1 bi 5,
**dadurch gekennzeichnet,**
**dass** der Antriebsring kreisförmig ist und die mindestens zwei elektromechanischen Antriebselemente so am Antriebsring angebracht sind, dass ihr jeweiliger Hub radial auf den Antriebsring wirkt.

7. Vorrichtung nach einem oder mehreren der vorangehenden Ansprüche 1 bis 6,
**dadurch gekennzeichnet,**
**dass** zwei elektromechanische Antriebselemente innerhalb einer Bewegungsebene des Antriebsrings um einen Winkel von annähernd 90° zueinander versetzt sind.

8. Vorrichtung nach einem oder mehreren der vorangehenden Ansprüche 1 bis 7,
**dadurch gekennzeichnet,**
**dass** mehr als zwei elektromechanische Antriebselemente innerhalb einer Bewegungsebene des Antriebsrings um einen annähernd konstanten Winkel zueinander versetzt sind.

9. Vorrichtung nach einem oder mehreren der vorangehenden Ansprüche 1 bis 8,
**dadurch gekennzeichnet,**
**dass** sich die Welle innerhalb des Antriebsrings befindet.

10. Vorrichtung nach einem oder mehreren der vorangehenden Ansprüche 1 bis 9,
**dadurch gekennzeichnet,**
**dass** sich die Welle außerhalb des Antriebsrings befindet.

11. Vorrichtung nach einem oder mehreren der vorangehenden Ansprüche 1 bis 10,
**dadurch gekennzeichnet,**
**dass** zwischen mindestens einem der mindestens zwei elektromechanischen Antriebselemente und dem Antriebsring ein Hubübersetzer, insbesondere ein Hebelübersetzer, vorhanden ist.

12. Vorrichtung nach einem oder mehreren der vorangehenden Ansprüche 1 bis 11,
**dadurch gekennzeichnet,**
**dass** gegenüber mindestens einem der mindestens zwei elektromechanischen Antriebselemente ein Federelement am Antriebsring befestigt ist.

13. Vorrichtung nach einem oder mehreren der vorangehenden Ansprüche 1 bis 12,
**dadurch gekennzeichnet,**
**dass** zwischen Antriebsring und Welle ein dauernder Druckkontakt besteht.

14. Vorrichtung nach einem oder mehreren der vorangehenden Ansprüche 1 bis 13,
**dadurch gekennzeichnet,**
**dass** die Kraftübertragung zwischen dem Antriebsring und der Welle formschlüssig erfolgt.

15. Vorrichtung nach einem oder mehreren der vorangehenden Ansprüche 1 bis 14,
**dadurch gekennzeichnet,**
**dass** Antriebsring und Welle eine Verzahnung aufweisen.

16. Vorrichtung nach einem oder mehreren der vorangehenden Ansprüche 1 bis 15,
**dadurch gekennzeichnet,**
**dass** an einer Welle mehrere Motoreinheiten mit jeweils einem Antriebsring benachbart angeordnet sind.

17. Vorrichtung nach einem oder mehreren der vorangehenden Ansprüche 1 bis 16,
**dadurch gekennzeichnet,**
**dass** zwei äußere Antriebsringe gekoppelt sind und ein dritter Antriebsring zwischenliegend auf der Welle positioniert ist.

18. Verfahren zum Feststellen und/oder Lösen einer Bremse (5) eines Fahrzeugs, insbesondere Kraftfahrzeuges, nach einem oder mehreren der Ansprüche 1 bis 17,
**dadurch gekennzeichnet,**
**dass** in Ausgangsstellung der Antriebsring auf die Welle gedrückt wird, während des Betriebs durch eine zeitlich versetzte Betätigung der elektromechanischen Antriebselemente der Antriebsring umlaufend verschoben wird, so dass durch einen Kraftübertrag vom Antriebsring die Welle gedreht wird.

19. Verfahren nach Anspruch 18,
**dadurch gekennzeichnet,**
**dass** zwei elektromechanische Antriebselemente innerhalb einer Bewegungsebene des Antriebsrings um einen Winkel von annähernd 90° zueinander versetzt sind,
- die zwei elektromechanischen Aktoren druckvorgespannte Piezoaktoren sind,
- in Ausgangsstellung der Hub der Piezoaktoren minimal ist und ein dauernder Druckkontakt zwischen Antriebsring und Welle besteht,
- während des Betriebs der Hub der Piezoaktoren sinusförmig und seitlich um annähernd 90° versetzt auf die Antriebswelle aufgebracht wird.

20. Verfahren nach Anspruch 18 oder 19,
bei dem mindestens zwei elektromechanische Motoren eine Welle antreiben.

## Claims

1. Apparatus for engaging and/or releasing a brake (5) of a vehicle, especially a motor vehicle, with
- an electric-rotational drive device (1) controlled by an electronic control device (2) for creating a rotational movement,
- a device for converting the rotational movement into a translational movement acting to engage and/or release the brake,
**characterised in that** the drive device (1) features
- at least two electromechanical drive elements,
- at least one drive ring, which can be excited by a stroke of the electromechanical drive elements into a circumferential displacement movement,
- a shaft which is able to be put onto the drive ring so that the shaft is able to be rotated by the displacement movement of the drive ring, and
- the at least one drive ring is connected mechanically rigidly to the drive elements.

2. The apparatus according to claim 1,
**characterised in that**
the at least two electromechanical drive elements are piezoactuators.

3. The apparatus according to claim 1 or 2,
**characterised in that**
the device for converting the rotational movement into a translational movement acting to engage or release the brake is a spindle or a cam disc (3).

4. The apparatus according to claim 1, 2 or 3,
**characterised in that**
the forces of the translational movement acting on the brake are transmitted by means of a Bowden cable (4) to the brake (5).

5. The apparatus according to one or more of the previous claims 1 to 4,
**characterised in that**
the brake (5) is a drum brake, a wedge brake or a floating caliper brake.

6. The apparatus according to one or more of the previous claims 1 to 5,
**characterised in that**
the drive ring is circular and the at least two electromechanical drive elements are attached to the drive ring so that their respective stroke acts radially on the drive ring.

7. The apparatus according to one or more of the previous claims 1 to 6,
**characterised in that**
two electromechanical drive elements are offset within a plane of movement of the drive ring by an angle of approximately 90° in relation to one another.

8. The apparatus according to one or more of the previous claims 1 to 7,
**characterised in that**
more than two electromechanical drive elements are offset by an approximately constant angle to each other within a plane of movement of the drive ring.

9. The apparatus according to one or more of the previous claims 1 to 8,
**characterised in that**
the shaft is located within the drive ring.

10. The apparatus according to one or more of the previous claims 1 to 9,
**characterised in that**
the shaft is located outside the drive ring.

11. The apparatus according to one or more of the previous claims 1 to 10, **characterised in that** a stroke translator, especially a lever translator is present between at least one of the at least two electromechanical drive elements and the drive ring.

12. The apparatus according to one or more of the previous claims 1 to 11, **characterised in that** a spring element is attached to the drive ring opposite at least one of the at least two electromechanical drive elements.

13. The apparatus according to one or more of the previous claims 1 to 12,
**characterised in that**
there is permanent pressure contact between drive ring and shaft.

14. The apparatus according to one or more of the previous claims 1 to 13,
**characterised in that**
The force is transmitted by means of a form fit between the drive ring and the shaft.

15. The apparatus according to one or more of the previous claims 1 to 14,
**characterised in that**
the drive ring and shaft have toothing.

16. The apparatus according to one or more of the previous claims 1 to 15,
**characterised in that**
a number of motor units are adjacently arranged on the shaft, each with a drive ring.

17. The apparatus according to one or more of the previous claims 1 to 16,
**characterised in that**
two outer drive rings are coupled and a third drive ring is positioned between them on the shaft.

18. A method for engaging and/or releasing a brake (5) of a vehicle, especially a motor vehicle, according to one or more of claims 1 to 17,
**characterised in that**,
in the initial position, the drive ring is pressed onto the shaft, during operation the drive ring is moved circumferentially by a time-offset actuation of the electromechanical drive elements, so that the shaft is turned by a force transmitted from the drive ring.

19. The method according to claim 18,
**characterised in that**
two electromechanical drive elements within a plane of movement of the drive ring are offset by an angle of approximately 90° in relation to one another,
- the two electromechanical actuators are piezoactuators at a pre-tensioned pressure,
- in the initial position the stroke of the piezoactuators is minimal and there is a permanent pressure contact between drive ring and shaft,
- during operation the stroke of the piezoactuator is applied sinusoidally and laterally offset by approximately 90° to the drive shaft.

20. The method according to claim 18 or 19,
in which at least two electromechanical motors drive a shaft.

## Revendications

1. Dispositif pour bloquer et/ou desserrer un frein (5) d'un véhicule, notamment d'un véhicule automobile, comprenant
- un dispositif d'entraînement (1) électrorotatif commandé par un dispositif de commande électronique (2) pour la production d'un mouvement de rotation,
- un dispositif de conversion du mouvement de rotation en un mouvement de translation provoquant le blocage et/ou desserrage du frein,
**caractérisé en ce que** le dispositif d'entraînement (1) comprend
- au moins deux éléments d'entraînement électromécaniques,
- au moins une bague d'entraînement qui peut être animée d'un mouvement de déplacement circulaire grâce à une course des éléments d'entraînement électromécaniques,
- un arbre qui peut être monté sur la bague d'entraînement de manière à ce que le mouvement de déplacement de la bague d'entraînement puisse faire tourner l'arbre et
- la au moins une bague d'entraînement est reliée de façon mécaniquement rigide aux éléments d'entraînement.

2. Dispositif selon la revendication 1, **caractérisé en ce que** les au moins deux éléments d'entraînement électromécaniques sont des actionneurs piézo-électriques.

3. Dispositif selon la revendication 1 ou 2, **caractérisé en ce que** le dispositif de conversion du mouvement de rotation en un mouvement de translation provoquant le blocage et/ou desserrage du frein est une tige ou une came (3).

4. Dispositif selon la revendication 1, 2 ou 3, **caractérisé en ce que** les forces du mouvement de translation agissant sur le frein sont transmises au frein (5) au moyen d'un câble Bowden (4).

5. Dispositif selon l'une ou plusieurs des revendications précédentes 1 à 4, **caractérisé en ce que** le frein (5) est un frein à tambour, un frein à coin d'écartement ou un frein à étrier flottant.

6. Dispositif selon l'une ou plusieurs des revendications précédentes 1 à 5, **caractérisé en ce que** la bague d'entraînement est circulaire et les au moins deux éléments d'entraînement électromécaniques sont placés sur la bague d'entraînement de manière à ce que leur course respective agisse radialement sur la bague d'entraînement.

7. Dispositif selon l'une ou plusieurs des revendications précédentes 1 à 6, **caractérisé en ce que** deux éléments d'entraînement électromécaniques sont décalés d'un angle d'environ 90° l'un par rapport à l'autre à l'intérieur d'un plan de mouvement de la bague d'entraînement.

8. Dispositif selon l'une ou plusieurs des revendications précédentes 1 à 7, **caractérisé en ce que** plus de deux éléments électromécaniques sont décalés d'un angle à plus près constant les uns par rapport aux autres à l'intérieur d'un plan de mouvement de la bague d'entraînement.

9. Dispositif selon l'une ou plusieurs des revendications précédentes 1 à 8, **caractérisé en ce que** l'arbre se trouve à l'intérieur de la bague d'entraînement.

10. Dispositif selon l'une ou plusieurs des revendications précédentes 1 à 9, **caractérisé en ce que** l'arbre se trouve à l'extérieur de la bague d'entraînement.

11. Dispositif selon l'une ou plusieurs des revendications précédentes 1 à 10, **caractérisé en ce qu'**un démultiplicateur de course, notamment un démultiplicateur à effet de levier, est présent entre au moins un des au moins deux éléments d'entraînement électromécaniques et la bague d'entraînement.

12. Dispositif selon l'une ou plusieurs des revendications précédentes 1 à 11, **caractérisé en ce qu'**un élément de ressort est fixé sur la bague d'entraînement en face d'au moins un des au moins deux éléments d'entraînement électromécaniques.

13. Dispositif selon l'une ou plusieurs des revendications précédentes 1 à 12, **caractérisé en ce qu'**il existe un contact par pression permanent entre la bague d'entraînement et l'arbre.

14. Dispositif selon l'une ou plusieurs des revendications précédentes 1 à 13, **caractérisé en ce que** la transmission des forces entre la bague d'entraînement et l'arbre se fait par conjugaison de forme.

15. Dispositif selon l'une ou plusieurs des revendications précédentes 1 à 14, **caractérisé en ce que** la bague d'entraînement et l'arbre sont pourvus d'une denture.

16. Dispositif selon l'une ou plusieurs des revendications précédentes 1 à 15, **caractérisé en ce que** plusieurs unités motrices comprenant à chaque fois une bague d'entraînement sont voisines les unes des autres au niveau d'un arbre.

17. Dispositif selon l'une ou plusieurs des revendications précédentes 1 à 16, **caractérisé en ce que** deux bagues d'entraînement extérieures sont couplées et une troisième bague d'entraînement est positionnée sur l'arbre de manière intercalée.

18. Procédé de blocage et/ou desserrage d'un frein (5) d'un véhicule, notamment d'un véhicule automobile, selon l'une ou plusieurs des revendications 1 à 17, **caractérisé en ce que**, dans la position de départ, la bague d'entraînement est pressée sur l'arbre, pendant le fonctionnement, la bague d'entraînement subit un déplacement circulaire du fait d'un actionnement décalé dans le temps des éléments d'entraînement électromécaniques, de manière à ce que l'arbre soit mis en rotation par une transmission des forces de la bague d'entraînement.

19. Procédé selon la revendication 18, **caractérisé en ce que** deux éléments d'entraînement électromécaniques sont décalés d'un angle d'environ 90° l'un par rapport à l'autre à l'intérieur d'un plan de mouvement de la bague d'entraînement,
- les deux actionneurs électromécaniques sont des actionneurs piézo-électriques précontraints en compression,
- dans la position de départ, la course des actionneurs piézo-électriques est minimale et un contact par pression permanent existe entre la bague d'entraînement et l'arbre,
- pendant le fonctionnement, la course des actionneurs piézo-électriques est appliquée sur l'arbre d'entraînement de façon sinusoïdale et avec un décalage latéral d'environ 90°.

20. Procédé selon la revendication 18 ou 19, dans lequel au moins deux moteurs électromécaniques entraînent un arbre.
